# EUROPEAN PATENT SPECIFICATION

(11) **EP 0 385 732 B1**
(45) Date of publication and mention of the grant of the patent: **10.08.1994**
(21) Application number: 90302090.7
(22) Date of filing: 27.02.1990
(51) Int. Cl.: C07F 7/08, C08G 64/00, C08G 63/68

(54) **Hydroxyphenyl-containing group siloxane compounds**
Hydroxyphenylgruppen enthaltende Siloxan-Verbindungen
Composés siloxaniques contenant des groupes hydroxyphényliques

(30) Priority: 27.02.1989 JP 48069/89
(43) Date of publication of application: 05.09.1990
(73) Proprietor: Shin-Etsu Chemical Co., Ltd., Chiyoda-ku Tokyo 100 (JP); HOKKO CHEMICAL INDUSTRY CO. LTD., Chuo-ku Tokyo 103 (JP)
(72) Inventor: Kamei, Masanao, Annaka-shi, Gunma-ken (JP); Ichinohe, Shoji, Annaka-shi, Gunma-ken (JP)
(74) Representative: Moore, Anthony John

(56) References cited:
- EP-A- 0 162 523
- EP-A- 0 193 757
- DE-A- 2 257 206
- DE-A- 2 364 887
- US-A- 3 697 569

## Description

This invention relates to hydroxyphenyl group-containing siloxane compounds suitable for the modification of polycarbonates and polyesters.

Hitherto, polyester and polycarbonate resins have been modified with hydroxyphenyl group-containing silicone compounds for the purpose of improving physical properties such as flexibility, heat resistance and low temperature characteristics, and surface characteristics such as slippability and water-repellency.

For instance, siloxane compounds represented by the following general formula (II) are disclosed in U.S. Patents Nos. 3,182,662 and 3,419,634 as compounds for producing silicone-modified polycarbonate resins: 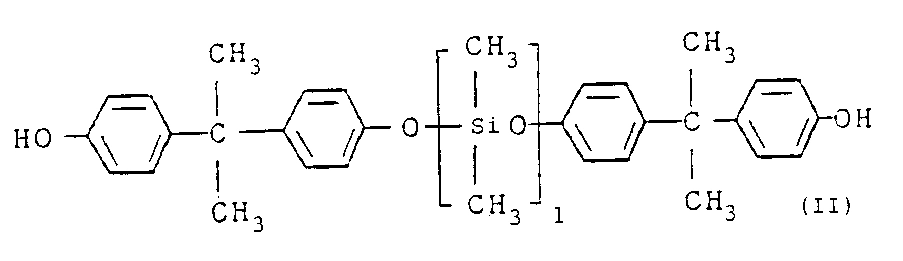
While the foregoing siloxane compounds readily enter into a modification reaction because their hydroxyl groups are located at the para-position of the phenyl group, the polycarbonate resins produced, which have the following general formula (III), have the defect that the stability to hydrolysis is low because of the introduction of an Si-O-C linkage into the polymer chain: 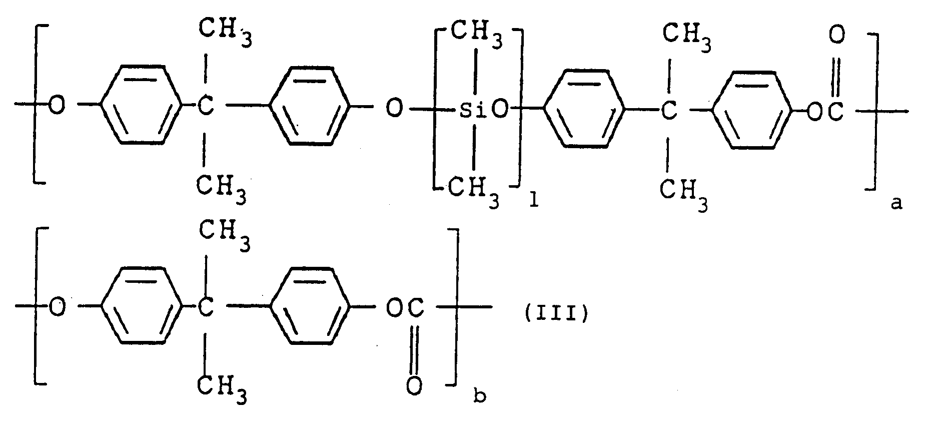
If, as a consequence it is proposed to produce a hydroxyphenyl group-containing silicone such as are represented by the following formula: 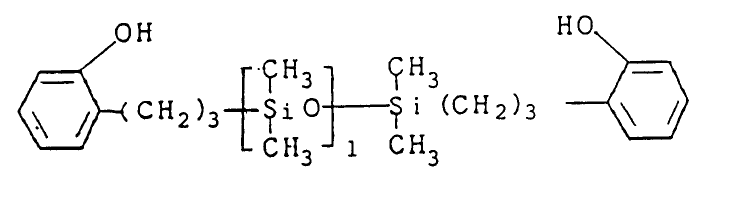
utilizing the compound 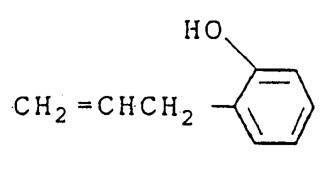
so that an Si-O-C linkage is not present, the corresponding silicone-modified polycarbonate resins cannot be obtained because the reactivity between the foregoing phenol compound and phosgene is low due to the presence of the OH group at the ortho-position of the phenyl group in the phenol compound.

Therefore, an object of this invention is to provide a hydroxyphenyl group-containing siloxane compound which has high reactivity, is highly stable to hydrolysis, and is well suited to the modification of polyester and polycarbonate resins.

As a result of concentrating our energies on obviating the above-described defects, it has now been found that a siloxane compound containing in the molecule at least one hydroxyphenyl group of the formula, 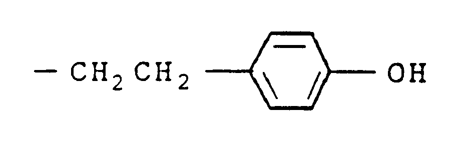
or 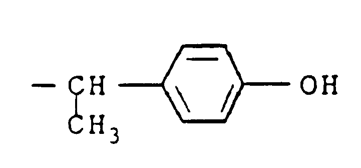
is very useful in the production of silicone-modified polyester and polycarbonate resins.

According to the present invention there is provided a hydroxyphenyl group-containing compound represented by the following general formula (1): 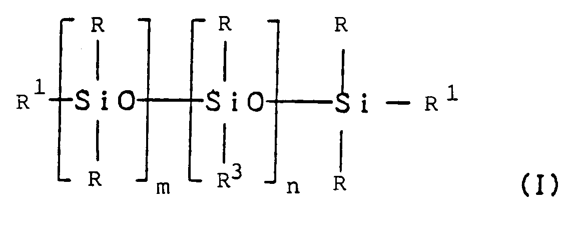
wherein R represents an alkyl group containing from 1 to 4 carbon atoms; R¹ represents R or R², where R² represents the group (Ia) or (Ib): 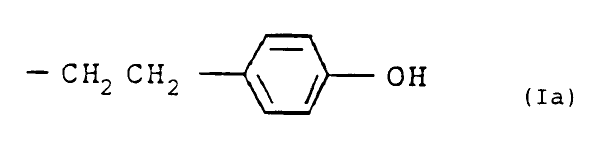
or 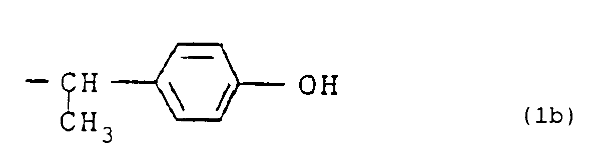
R³ represents a monovalent organic group containing from 1 to 20 carbon atoms; and m and n are each 0 or a positive integer, provided that m + n is 1 or more, and at least one R¹ represents R².

Not only do the hydroxyphenyl group-containing siloxane compounds of this invention have high reactivity, and are well suited for the modification of polycarbonate resins and polyester resins; but also the resins modified with such siloxane compounds acquire great usefulness because of their excellent surface characteristics such as slippability and water repellency, as well as because of their physical properties such as flexibility and low temperature characteristics.

The hydroxyphenyl group-containing siloxane compound of this invention, which is represented by the general formula (I), 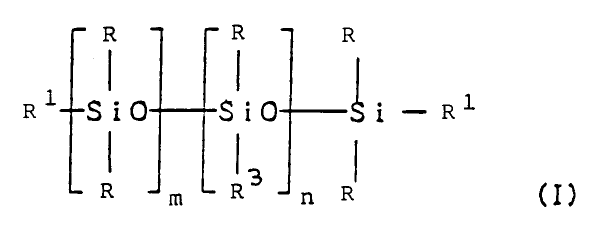
can be obtained using p-tert-butoxystyrene of the formula (V) as a starting material: 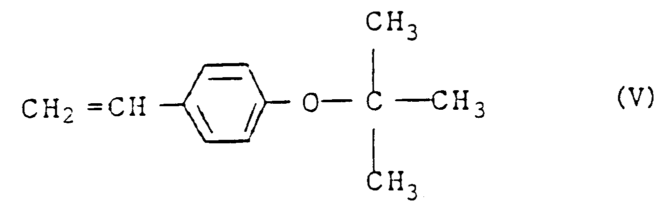
Firstly, an Si-H moiety-containing siloxane and the above p-tert-butoxystyrene (V) are caused to undergo an addition reaction in the presence of preferably chloroplatinic acid as catalyst to produce the corresponding adduct of the following general formula (VI): 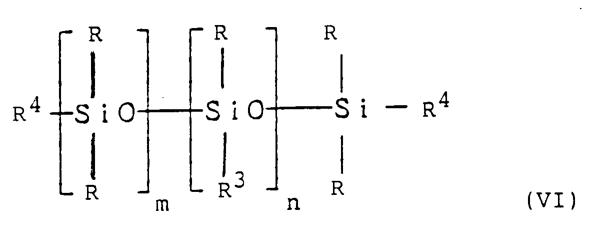
wherein R, R³, m and n have the same meanings as in general formula (I), and R⁴ is a group produced by isomerization which occurs during the addition reaction and which has the formula 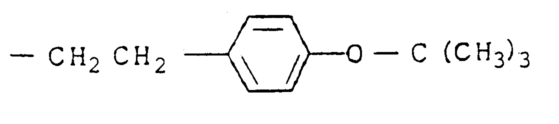
or 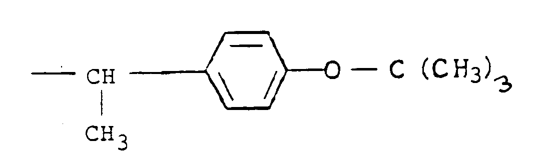
The addition reaction is effected under a reaction temperature of from 0 to 150°C, preferably from 50 to 120°C, using no solvent or a solvent having no active hydrogen, e.g., an aromatic hydrocarbon such as toluene or xylene, an aliphatic hydrocarbon such as hexane or octane, an ester such as ethyl acetate or butyl acetate, or a chlorinated hydrocarbon such as carbon tetrachloride or trichloroethane. As examples of catalysts suitable for the addition reaction, mention may be made of known catalysts such as platinum, palladium and rhodium complexes.

Secondly, an organic solvent, methanol and concentrated hydrochloric acid are added to the above-mentioned addition product, and stirred for 24 hours at room temperature to yield the desired hydroxyphenl group-containing siloxane compound (I). Examples of the organic solvent usable in the foregoing reaction include ethers such as tetrahydrofuran, diethylether and dibutylether, and aromatic hydrocarbons such as toluene and xylene. The amount of concentrated hydrochloric acid used therein ranges from 0.5 to 3.0 g, preferably from 1.0 to 2.0 g, per 10 mmol of hydroxyphenyl group. The thus-obtained hydroxyphenyl group-containing siloxane compound is reacted with phosgene or carboxylic acid to yield quite readily a silicone-modified polycarbonate or polyester resin having excellent stability to hydrolysis.

### EXAMPLES

This invention will now be illustrated in more detail by reference to the following Examples. However, the invention should not be construed as being limited to these Examples.

### EXAMPLE 1

Into a 300 ml flask equipped with a stirrer and a condenser, were placed 89 g (0.6 mol) of pentadimethyl-disiloxane and 0.05 g of a 2% isopropyl alcohol solution of chloroplatinic acid was added thereto. The resulting mixture was heated in an oil bath so that the inside temperature was kept at 70°C and 88 g (0.5 mol) of p-tert-butoxystyrene (V) were added dropwise thereto with stirring. After the conclusion of the dropwise addition the reaction mixture was further stirred for 1 hour at 80°C, and it was then checked by gas chromatography whether or not any p-tert-butoxysturene (V) added as a starting material remained. The disappearance of p-tert-butoxystyrene was thereby confirmed.

The reaction product was distilled to yield 137 g of a mixture of the compound, 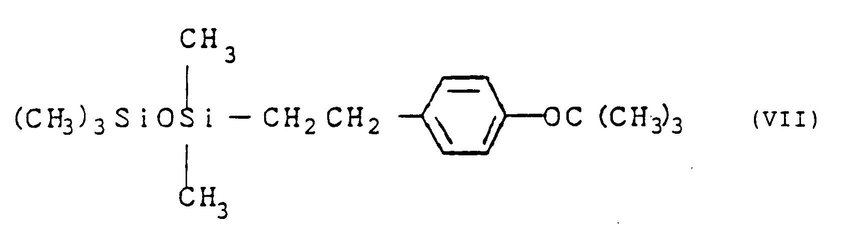
and the compound, 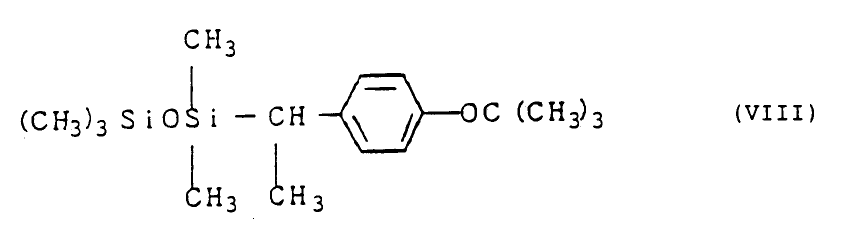
This mixture had a boiling point of 132-134°C/4 mmHg, and the yield thereof was 85%.

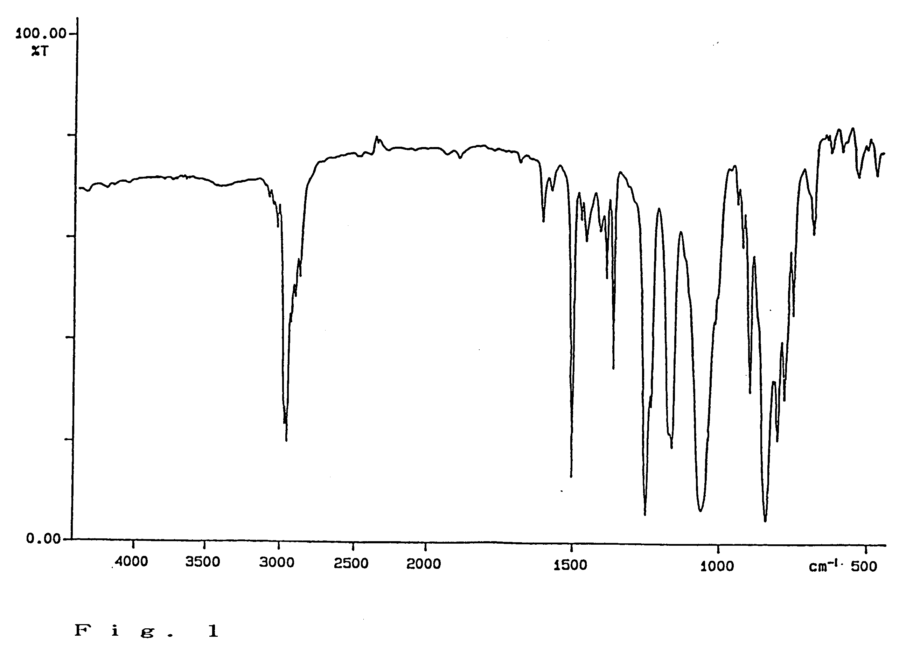

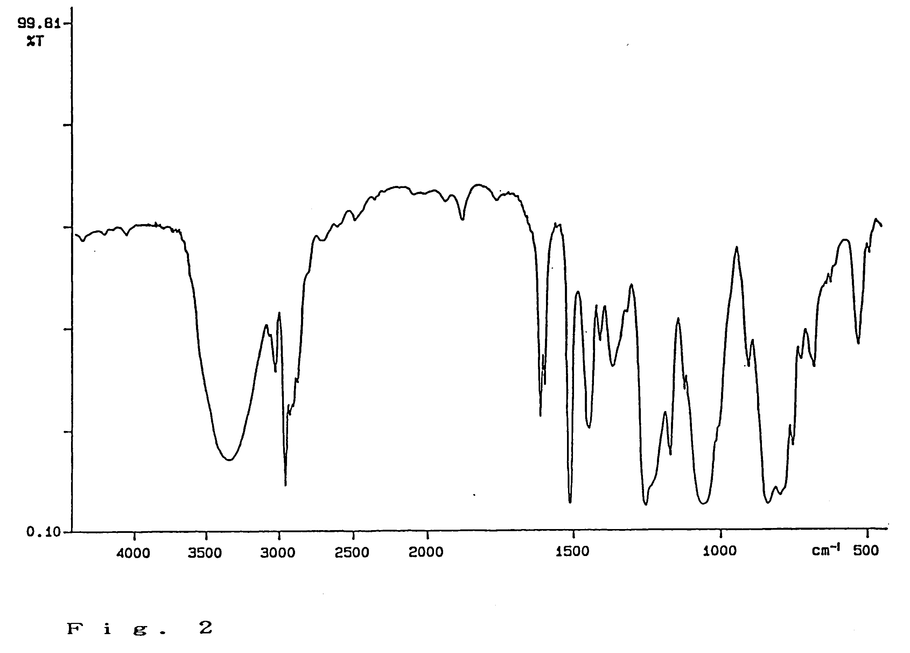

The above-illustrated mixture was identified using ¹H-NMR and GC-MS (Gas Chromatography-Mass Spectrometry) analyses. In addition, it had an infrared absorption spectrum shown in Fig. 1 of the accompanying drawings.
- ¹H NMR :: δ (ppm);
- Internal Standard:: CH₂Cl₂,
- Solvent:: CDCl₃.
- Compound (VII):: 0.2 (Si-CH₃, S, 6H)
0.3 (Si-CH₃, S, 9H)
0.9 (Si-CH₂-, m, 2H)
1.3 (C-CH₃, S, 9H)
2.7 (-C₆H₄-CH₂, m, 2H)
6.9 (-C₆H₄-, m, 4H)
- Compound (VIII):: 0.2 (Si-CH₃, S, 6H)
0.3 (Si-CH₃, S, 9H)
1.3 (-C-CH₃, S, 9H) 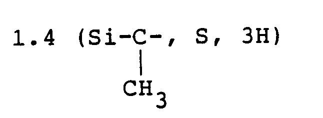 2.1 (Si-CH-, m, 1H)
7.0 (-C₆H₄-, m, 4H)
As the result of GC-MS analysis, the value of m/e was found to be 324 in both the compounds (VII) and (VIII).

A 9.7 g (30 mmol) portion of the above-described mixture of the compounds (VII) and (VIII), 25 g of tetrahydrofuran, 15 g of methanol and 4.5 g of concentrated hydrochloric acid were mixed, and caused to react for 24 hours. Thereafter, the completion of the reaction was checked by gas chromatography, and the result thereof supported the disappearance of the compounds (VII) and (VIII) used as a starting material.

After the conclusion of the reaction, the waste acid was separated by the addition of 15 g of toluene and 20 g of water, and distillation was carried out after washing.

Thus, there were obtained 7 g of a mixture of 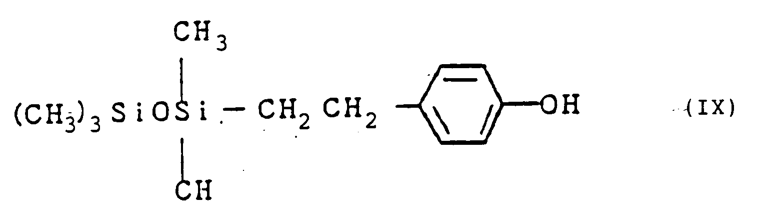
and 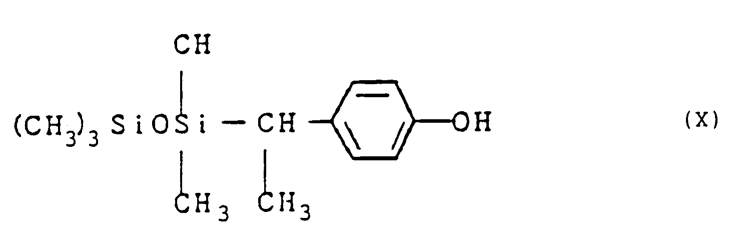
The yield thereof was 88%.

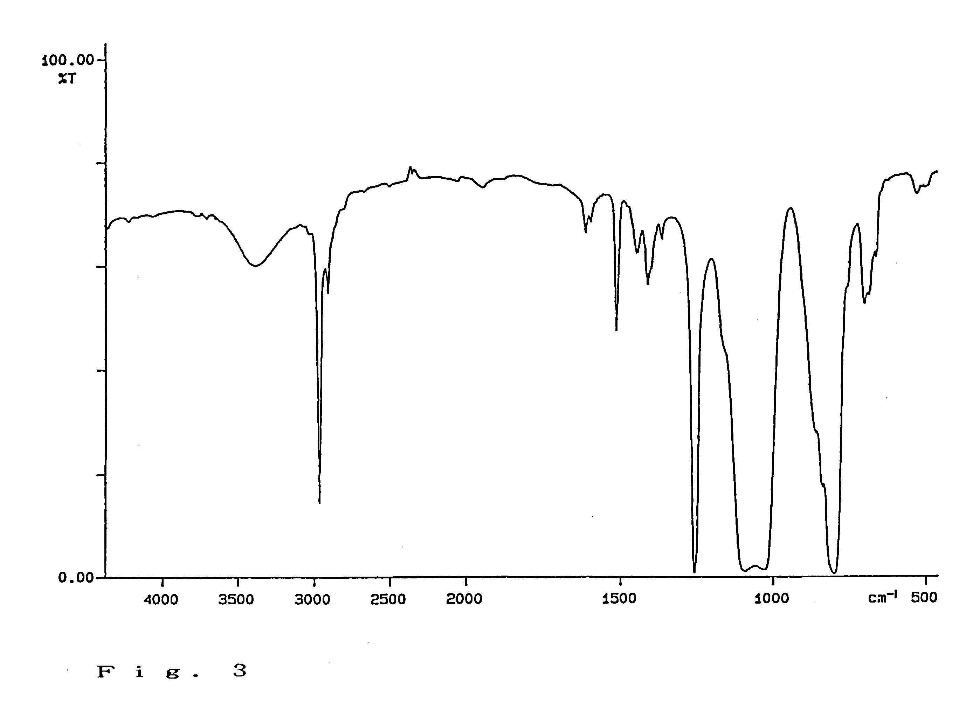

The above-illustrated compounds (IX) and (X) were identified by ¹H-NMR analysis and GC-MS analysis. In addition, the infrared absorption spectrum exhibited by the mixture of these compounds is given in Fig. 2.
- ¹H-NMR:: (ppm);
- Internal Standard:: CH₂Cl₂, Solvent: CDC l₃.
- Compound (IX):: 0.2 (Si-CH₃, S, 6H)
0.3 (Si-CH₃, S, 9H)
0.9 (Si-CH₂-, m, 2H)
2.7 ( -C₆H₄-CH₂, m, 2H)
6.1 (-OH, S, 1H)
7.0 (-C₆H₄-, m, 4H)
- Compound (X):: 0.2 (Si-CH₃, S, 6H)
0.3 (Si-CH₃, S, 9H) 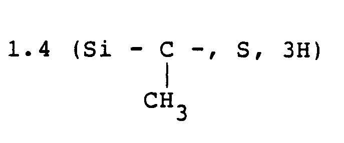 2.1 (Si-CH-, m, 1H)
6.2 (-OH, S, 1H)
7.1 (-C₆H₄-, m, 4H)
As the result of GC-MS analysis, the value of m/e was found to be 268 in both the compounds (IX) and (X).

### EXAMPLE 2

In a one-litre flask equipped with a stirrer and a condenser, 370 g (0.25 mol) of one-end-hydrogen siloxane of the formula, 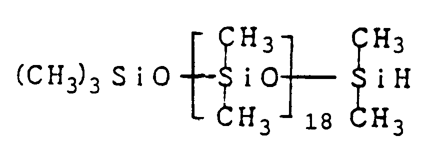
were placed, and thereto was added 0.1 g of a 2% isopropyl alcohol solution of chloroplatinic acid. The resulting mixture was heated on an oil bath so that the inside temperature was kept at 70°C and thereto, 50 g (0.28 mol) of p-tert-butoxystyrene (V) were added dropwise with stirring. The reaction was run at 80°C for 2 hours. After the disappearance of substantially all the Si-H bond had been ascertained, the reaction product was cooled, admixed with 300 g of tetrahydrofuran, 150 g of methanol and 30 g of concentrated hydrochloric acid, and reacted for 36 hours at room temperature. After the conclusion of the reaction, the waste acid was separated by the addition of toluene and water, and the solvent was distilled away after washing. Thus, 370 g of a mixture of hydroxyphenyl group-containing siloxanes (XI) and (XII) having the following structural formulae, respectively, was obtained. The yield thereof was 92%. 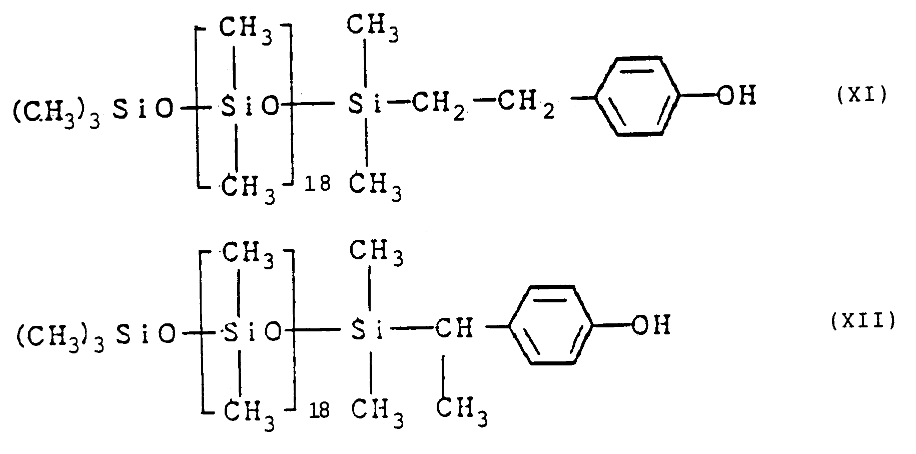
According to molecular weight measurement by GPC (gel permeation chromathography), the mixture had a number average molecular weight (Mn) of 1,900 based on polystyrene, and a weight average molecular weight (Mw) of 2,300 based on polystyrene. The degree of polydispersibility (Mn/Mw) was 1.2, and the hydroxy value was 37 (KOH mg/g), which was in good agreement with the theoretical value 34.

### EXAMPLE 3

In a one-litre flask equipped with a stirrer and a condenser, there were placed 366 g (0.25 mol) of both-end-hydrogen siloxane having the following average formula, 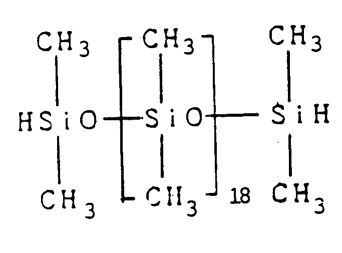
and thereto was added 0.1 g of a 2% isopropyl alcohol solution of chloroplatinic acid. The resulting mixture was heated on an oil bath so that the inside temperature was kept at 70°C and thereto, 93 g (0.53 mol) of p-tert-butoxystyrene (V) were added dropwise with stirring. The reaction was run at 80°C for 2 hours. After the disappearance of substantially all the Si-H bonds had been ascertained, the reaction product was cooled, admixed with 300 g of tetrahydrofuran, 150 g of methanol and 50 g of concentrated hydrochloric acid, and reacted for 36 hours at room temperature. After the conclusion of the reaction, the waste acid was separated by the addition of toluene and water, and the solvent was distilled away after washing. Thus, 400 g of a mixture of hydroxyphenyl group-containing siloxanes (XIII), (XIV) and (XV) having the following structural formulae, respectively, was obtained in an 88% yield: 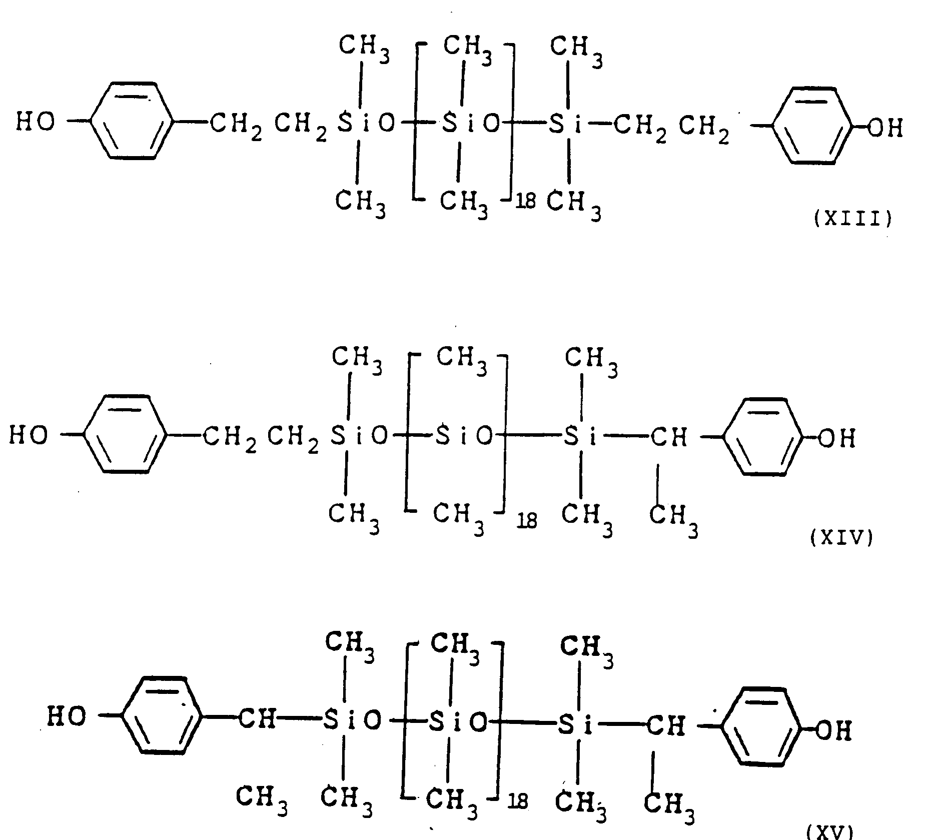
According to molecular weight measurement by GPC, the mixture had a number average molecular weight (Mn) of 2,000 based on polystyrene, and a weight average molecular weight (Mw) of 4,200 based on polystyrene. The degree of polydispersibility (Mn/Mw) was 2.1, and the hydroxyl value was 65 (KOH mg/g), which was in good agreement with the theoretical value 62.

## Claims

1. A hydroxyphenyl group-containing siloxane compound represented by the following general formula (I): 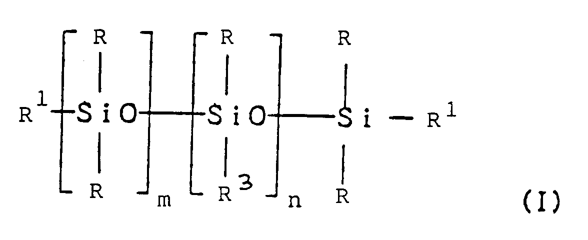 wherein R represents an alkyl group of from 1 to 4 carbon atoms; R¹ represents R or R², where R² is a group of the formula (1a) or (Ib): 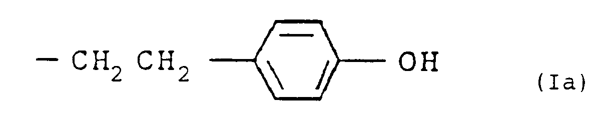 or 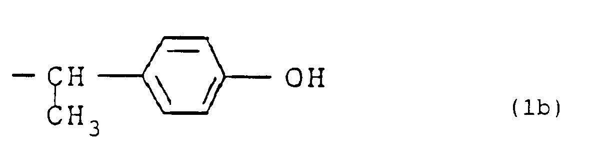 R³ represents a monovalent organic group of from 1 to 20 carbon atoms; m and n are each 0 or a positive integer, provided that m + n is 1 or more, and at least one R¹ represents R².

2. A siloxane compound as claimed in Claim 1, wherein both the groups R¹ represent R², each R² being chosen from the groups (1a) and (1b) so as to be the same or different.

3. A process for preparing a siloxane compound as claimed in Claim 1, comprising stirring at room temperature a mixture of an organic solvent, methanol, concentrated hydrochloric acid and a compound of the following general formula (VI): 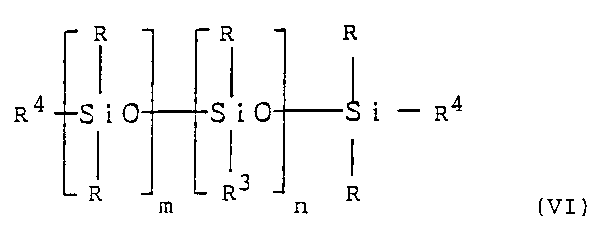 wherein R, R³, m and n are as defined in Claim 1 and R⁴ is a group of the formula 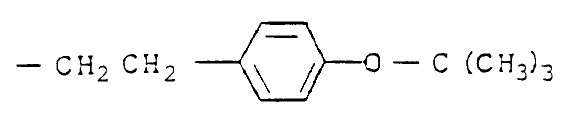 or

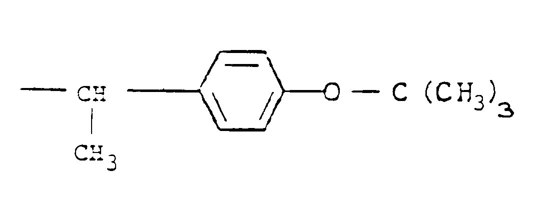

4. A process as claimed in Claim 3, wherein the compound of the general formula (VI) is prepared by reacting a corresponding siloxane containing an Si-H moiety with p-tert-butoxystyrene in the present of a catalyst.

5. A process as claimed in Claim 3 or 4, wherein said organic solvent comprises at least one solvent selected from ethers and aromatic hydrocarbons.

6. A process as claimed in claim 3, 4 or 5, wherein the concentrated hydrochloric acid is used in an amount of from 0.5 to 3.0 g per 10 mmol of the hydroxyphenyl group.

7. A process as claimed in Claim 5, wherein the amount of the concentrated hydrochloric acid is from 1.0 to 2.0 g per 10 mmol of the hydroxymethyl group.

8. A silicone-modified polycarbonate resin obtained by reacting a compound as claimed in Claim 1 or 2 with phosgene.

9. A silicone-modified polyester resin obtained by reacting a compound as claimed in Claim 1 or 2 with a carboxylic acid.

## Patentansprüche

1. Hydroxyphenylgruppen enthaltnede Siloxan-Verbindung, dargestellt durch die folgende allgemeine Formel (I): 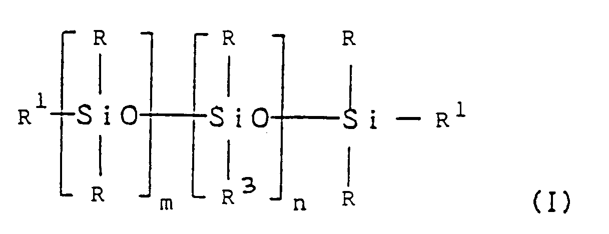 worin R eine Alkylguppe mit 1 bis 4 Kohlenstoffatomen darstellt; R¹ stellt R oder R² dar, wobei R² eine Gruppe der Formel (Ia) oder (Ib) ist: 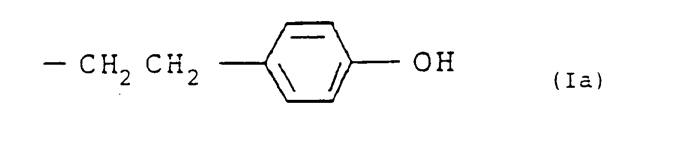 oder 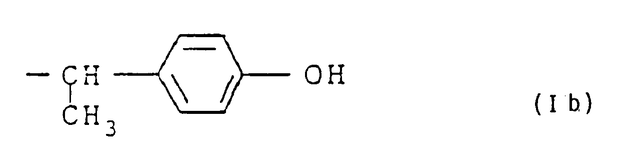 R³ stellt eine einwertige organische Gruppe mit 1 bis 20 Kohlenstoffatomen dar; m und n sind jeweils 0 oder eine positive Zahl, vorausgesetzt, daß m + n 1 oder mehr ist und wenigstens ein R¹ ein R² darstellt.

2. Siloxan-Verbindung nach Anspruch 1, worin beide R¹-Gruppen R² darstellen, wobei R² aus den Gruppen (Ia) und (Ib) gewählt wird, so daß sie gleich oder verschieden sind.

3. Verfahren zur Herstellung einer Siloxan-Verbindung nach Anspruch 1, umfassend die Vermischung bei Raumtemperatur von einer Mischung eines organischen Lösungsmittels, Methanols, konzentrierter Salzsäure und einer Verbindung der folgenden allgemeinen Formel (VI): 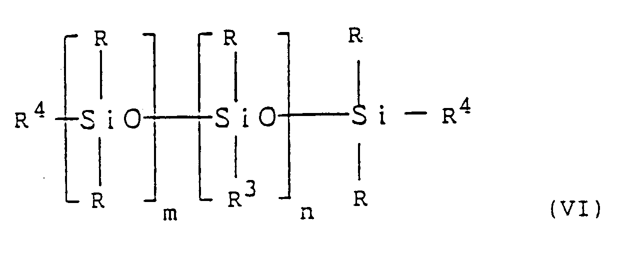 worin R, R³, m und n wie in Anspruch 1 definiert sind und worin R⁴ eine Gruppe der Formel 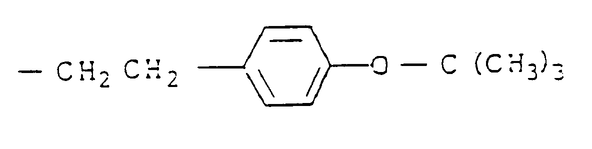 oder 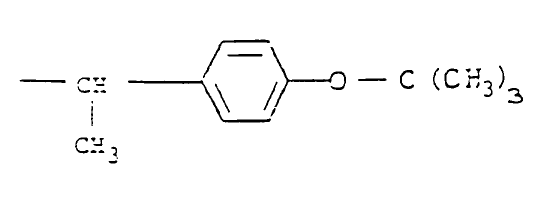 ist.

4. Verfahren nach Anspruch 3, worin die Verbindung der allgemeinen Formel (VI) durch die Reaktion eines entsprechenden, einen Si-H-Teil enthaltenden Siloxans mit p-tert-Butoxystyrol in Gegenwart eines Katalysators hergestellt wird.

5. Verfahren nach Anspruch 3 oder 4, worin das organische Lösungsmittel wenigstens ein Lösungsmittel gewählt aus den Ethern oder aromatischen Kohlenwasserstoffen umfaßt.

6. Verfahren nach einem der Ansprüche 3, 4 oder 5, worin die konzentrierte Salzsäure in einer Menge von 0,5 bis 3 g pro 10 mmol der Hydroxyphenylgruppe verwendet wird.

7. Verfahren nach Anspruch 5, worin die Menge der konzentrierten Salzsäure 1,0 bis 2,0 g pro 10 mmol der Hydroxymethylgruppe beträgt.

8. Silikon-modifiziertes Polycarbonatharz, erhalten durch die Reaktion einer Verbindung nach Anspruch 1 oder 2 mit Phosgen.

9. Silikon-modifiziertes Polyesterharz, erhalten durch die Reaktion einer Verbindung nach Anspruch 1 oder 2 mit einer Carbonsäure.

## Revendications

1. Composé siloxanique contenant des groupes hydroxyphényles, représenté par la formule générale suivante (I) : 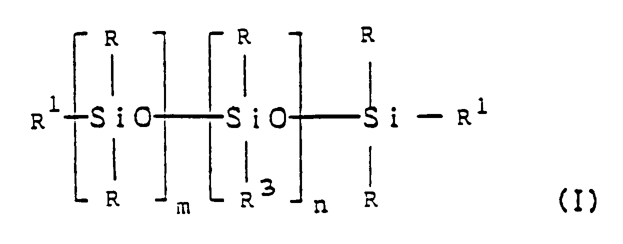 dans laquelle R représente un groupe alcoyle de 1 à 4 atomes de carbone, R¹ représente R ou R², R² étant un groupe de la ou formule (Ia) ou (Ib) : 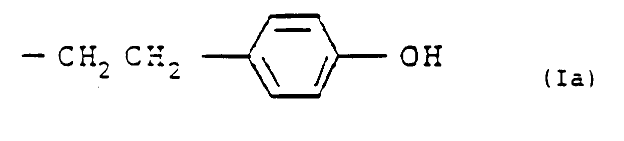 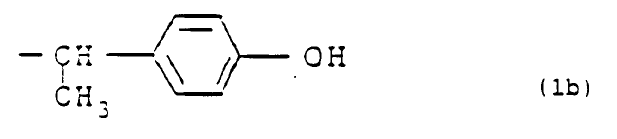 R³ représente un groupe organique monovalent de 1 à 20 atomes de carbone, chacun de m et n est égal à 0 ou est un entier positif, pourvu que m + n soit égal à 1 ou davantage, et au moins un groupe R¹ représente un groupe R².

2. Composé siloxanique selon la revendication 1, dans lequel les deux groupes R¹ représentent R², les R² étant choisis parmi les groupes (Ia) et (Ib) de façon à être identiques ou différents.

3. Procédé pour préparer un composé siloxanique selon la revendication 1, consistant à agiter à la température ambiante un mélange d'un solvant organique, de méthanol et d'acide chlorhydrique concentré et d'un composé de la formule générale suivante (VI) : 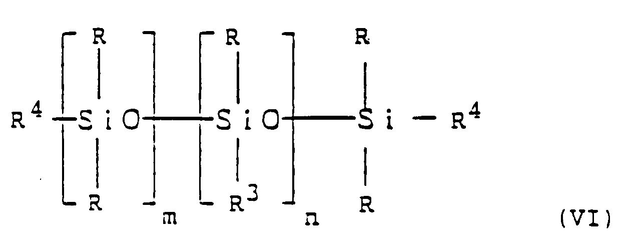 dans laquelle R, R³, m et n ont les mêmes significations que dans la revendication 1, et R⁴ est un groupe de la formule : 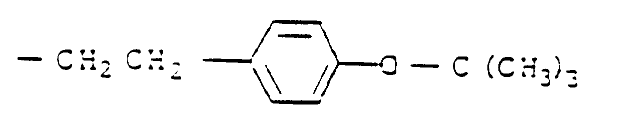 ou

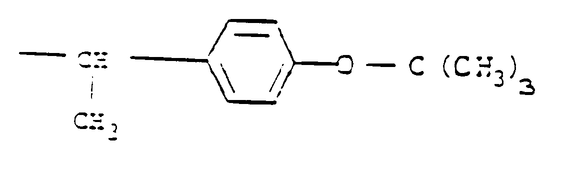

4. Procédé selon la revendication 3, dans lequel le composé de la formule générale (VI) est préparé en faisant réagir un siloxane correspondant contenant une partie Si-H avec p-tert-butoxystyrène en la présence d'un catalyseur.

5. Procédé selon la revendication 3 ou la revendication 4, dans lequel le solvant organique comprend au moins un solvant choisi parmi des éthers et des hydrocarbures aromatiques.

6. Procédé selon l'une des revendications 3, 4 ou 5, dans lequel la quantité d'acide chlorhydrique concentré utilisée est comprise entre 0,5 et 3,0 g pour 10 mmoles du groupe hydroxyphényle.

7. Procédé selon la revendication 5, dans lequel la quantité de l'acide chlorhydrique concentré est comprise entre 1,0 et 2,0 g pour 10 mmoles du groupe hydroxyméhtyle.

8. Résine polycarbonate modifiée par des silicones, obtenue en faisant réagir un composé selon la revendication 1 ou la revendication 2 avec du phosgène.

9. Résine polyester modifiée par des silicones, obtenue en faisant réagir un composé selon la revendication 1 ou la revendication 2 avec un acide carboxylique.
